# EUROPEAN PATENT APPLICATION

(11) **EP 1 298 471 A1**
(43) Date of publication of application: **02.04.2003**
(21) Application number: 01308208.6
(22) Date of filing: 27.09.2001
(51) Int. Cl.: G02B 6/42

(54) **Apparatus for coupling optical elements in an optical module**

(71) Applicant: Agilent Technologies, Inc. (a Delaware corporation), Palo Alto, CA 94303 (US)
(72) Inventor: Meadowcroft, Simon, Stowmarket, Suffolk IP14 1TU (GB)
(74) Representative: Coker, David Graeme

(57) **Abstract**

In an optical module (1), an optical fibre (6) has an end (9) aligned with a semiconductor laser diode (10), such that light is coupled from a lasing portion of the diode (10) into the optical fibre (6). The laser diode (10) is mounted on a heatsink (8), which is itself mounted on a component portion (13) of a submount (11). The optical fibre (6) is mounted on a fibre attachment element (12), which is mounted on the component portion (13) of submount (11) in order to maintain the laser diode and the optical fibre in alignment. The submount (11) is mounted on an inner surface of the housing (2) by a fixing portion (14) leaving the component portion (13) of the submount (11) free of the housing (2), such that mechanical stresses in the housing (2) are not transmitted to the component portion (13) of the submount (11).

## Description

### Field of the Invention

This invention relates to an apparatus for coupling optical elements in an optical module, and more particularly, though not exclusively, to an apparatus for coupling an optical fibre in an optical module in alignment with an optical device, such as a laser diode.

### Background of the Invention

As is well known, in general, in an optical module there is provided an optical device, such as a laser diode or a photo diode, mounted on a heatsink, and an optical fibre mounted in a fibre attach element. The heatsink and the fibre attach element are both mounted on an optical submount in such a way that the fibre and the optical device are maintained in alignment. The submount is housed in a package housing so as to protect and isolate the submount and the components mounted thereon. However, because the submount is fixed to the housing, if the module is stressed, for example due to temperature variations, or due to mechanical fixing, such stresses can be transmitted through the housing to the submount and consequently cause changes in the coupling between the optical fibre and the optical device, resulting in unwanted optical fluctuations.

One known method of trying to overcome this problem is described in US Patent No. 6,106,161, in which solder bumps are used to try to isolate the optical elements from the package. However, this method is costly and difficult to produce efficiently, since the solder balls have to be attached to one of the surfaces prior to fixing. Furthermore, there is no guarantee that creep will not ensue once the package has been stressed.

### Brief Summary of the Invention

The present invention therefore seeks to provide an apparatus for coupling optical elements in an optical module, which overcomes, or at least reduces the above-mentioned problems of the prior art.

Accordingly, in a first aspect, the invention provides an apparatus for optically coupling at least first and second optical elements in an optical module, the apparatus comprising a first optical component, a second optical component, a substrate comprising a component portion and a fixing portion, the first and second optical components being mounted, directly or indirectly, on the component portion such that they are optically aligned and optically coupled together, and a housing of the module to which the fixing portion of the substrate is attached, wherein the mounting portion of the substrate is left free of the housing, such that stresses in the housing are not transmitted to the mounting portion of the substrate.

According to a second aspect, the invention provides an apparatus for optically coupling at least first and second optical elements in an optical module, the apparatus comprising a first optical component, a second optical component, a substrate comprising a component portion and a fixing portion, the first and second optical components being mounted, directly or indirectly, on the component portion such that they are optically aligned and optically coupled together, and a housing of the module to which the fixing portion of the substrate is attached, wherein the mounting portion of the substrate is suspended from the fixing portion and left unattached to the housing in a cantilever type arrangement.

In a third aspect, the invention provides an apparatus for optically coupling at least first and second optical elements in an optical module, the apparatus comprising a first optical component, a second optical component, a substrate comprising a component portion and a fixing portion, the first and second optical components being mounted, directly or indirectly, on the component portion such that they are optically aligned and optically coupled together, and a housing of the module to which the fixing portion of the submount is attached, wherein the fixing portion of the submount does not extend around the component portion for more than 90°.

According to a further aspect, the invention provides an apparatus for optically coupling at least first and second optical elements in an optical module, the apparatus comprising a first optical component, a second optical component, a substrate comprising a component portion and a fixing portion, the first and second optical components being mounted, directly or indirectly, on the component portion such that they are optically aligned and optically coupled together along a coupling axis, and a housing of the module to which the fixing portion of the substrate is attached, wherein the fixing portion of the substrate does not extend both across the alignment axis and parallel to the alignment axis.

In a still further aspect, the invention provides an apparatus for optically coupling at least first and second optical elements in an optical module, the apparatus comprising a first optical component, a second optical component, a substrate to which the first and second optical components are mounted, directly or indirectly, such that they are optically aligned and optically coupled together, and a housing of the module, the substrate being attached to the housing by a fixing point such that a remainder of the substrate on which the first and second optical components are mounted is substantially free of the housing whereby mechanical stresses in the housing are substantially not transmitted to the remainder of the substrate.

In a preferred embodiment, the first optical component is a laser diode, which may be mounted on a heatsink, which is mounted on the substrate. The second optical component is preferably an optical fibre, which may be mounted to a fibre attachment element which is mounted on the substrate.

Conveniently, the substrate is substantially quadrilateral and is preferably substantially rectangular.

In one embodiment, the fixing portion of the substrate is at a first end of the substrate and the rest of the substrate is free of the housing.

In another embodiment, the fixing portion of the substrate is at a first side of the substrate and the rest of the substrate is free of the housing.

### Brief Description of the Drawings

Several embodiments of the invention will now be more fully described, by way of example, with reference to the drawings, of which:
FIG. 1 shows a schematic diagram of an optical fibre within an optical module housing according to a first embodiment of the present invention;
FIG. 2 shows a schematic diagram of an optical fibre within an optical module housing according to a second embodiment of the present invention;
FIG. 3 shows a schematic diagram of an optical fibre within an optical module housing according to a third embodiment of the present invention; and
FIG. 4 shows a schematic diagram of an optical fibre within an optical module housing according to a fourth embodiment of the present invention.

### Detailed Description of the Drawings

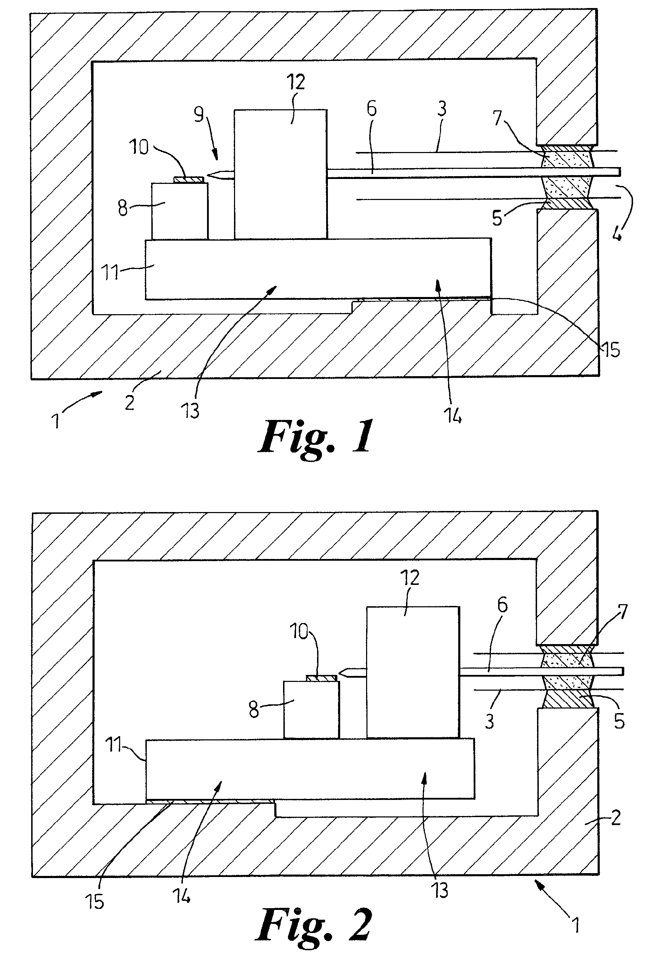

Thus, in a preferred embodiment, as partly shown in FIG. 1, an optical module 1 has a housing 2, which may be made of metal, such as Molybdenum, Copper - Tungsten (CuW), or Kovar. A protective tube 3 passes through an aperture 4 in the housing 2 and is welded to the housing, as shown at 5, the protective tube 3 also being formed of metal. The protective tube 3 contains within it an optical fibre 6 which may be hermetically sealed to the protective tube 3 by a glass seal 7. The protective tube 3 and the optical fibre 6 extend out from the module 1 for connection to the next component that the optical fibre is to be coupled to. This may be some way away, of course, especially if the module 1 forms part of an undersea repeater station.

As is well known, the end 9 of the optical fibre 6 that is within the module 1 is to be aligned with a semiconductor laser diode 10, such that light is coupled from a lasing portion of the diode 10 into the end face of the optical fibre 6. The end face of the optical fibre 6 is usually arranged to be tapered, so that as much of the light from the laser diode 10 as possible is coupled into the fibre 6. The laser diode 10 is mounted on a heatsink 8, which is made of a thermally conducting material, such as, for example, aluminum nitride (AIN). The heatsink 8 is itself mounted on a component portion 13 of a submount substrate 11, which may be made of an alloy such as Kovar, Invar, Copper - Tungsten (CuW), or Molybdenum. The optical fibre 6 is mounted on a fibre attachment element 12. The fibre attachment element 12 is mounted on the component portion 13 of submount 11 when the fibre 6 is aligned with the laser diode 10 in order to maintain the laser diode and the optical fibre in alignment.

The submount 11 is itself mounted on an inner surface of the housing 2. As mentioned above, if the submount 11 were to be fixed to the housing 2 along the submount's entire lower surface, stresses in the housing 2 could be transmitted to the submount 11. Such stresses can be formed in the housing 2 by, for example, temperature or mechanical changes, and the transfer of mechanical stress to the submount 11 can cause the laser diode 10 and the optical fibre 6 to be moved out of alignment.

Thus, according to this embodiment of the invention, in order to prevent, or at least substantially reduce, the transfer of stresses from the housing 2 to the submount 11, the submount 11 is only attached to the housing by a fixing portion 14 at a lower surface of the submount 11. The fixing portion 14 can be attached to the housing in any desired manner, for example, by welding (as shown by reference numeral 15 in FIG. 1), by soldering, by adhesion, or in any other suitable manner.

The fixing portion 14 of the submount 11 is generally separated from the component portion 13 in order to reduce the stresses transmitted thereto. In particular, the component portion 13 of the submount 11 is left free of the housing 2 in a cantilever style arrangement, such that only the fixing portion end of the submount 11 is fixed to the housing 2, and the component portion end is suspended above the housing 2. In this way, the component portion of the submount 11 does not have mechanical stresses transmitted to it that may cause the optical fibre 6 and the laser diode 10 to move out of alignment. The submount 11 is generally rigid and, with the component portion end being left free, any stresses transmitted to the fixing portion 14 do not cause differential movement in the component portion 13 of the submount 11.

Although, in FIG. 1, the fixing portion 14 is shown as being between the component portion 13 and the housing aperture 4, it will be appreciated that there are many different configurations that can be envisaged that still provide the advantages of the present invention. Some of these configurations are shown in FIGs. 2, 3 and 4, in which the same elements as in the embodiment of FIG. 1 have the same reference numerals. However, it should be borne in mind that these configurations are not exhaustive and various other configurations can be contemplated.

Thus, as shown in FIG. 2, in a second embodiment of the invention, the component portion 13 and the fixing portion 14 of the submount 11 are reversed, such that the fibre attachment element 12 is closer to the housing aperture 4, thus allowing a shorter length if optical fibre within the housing 2.

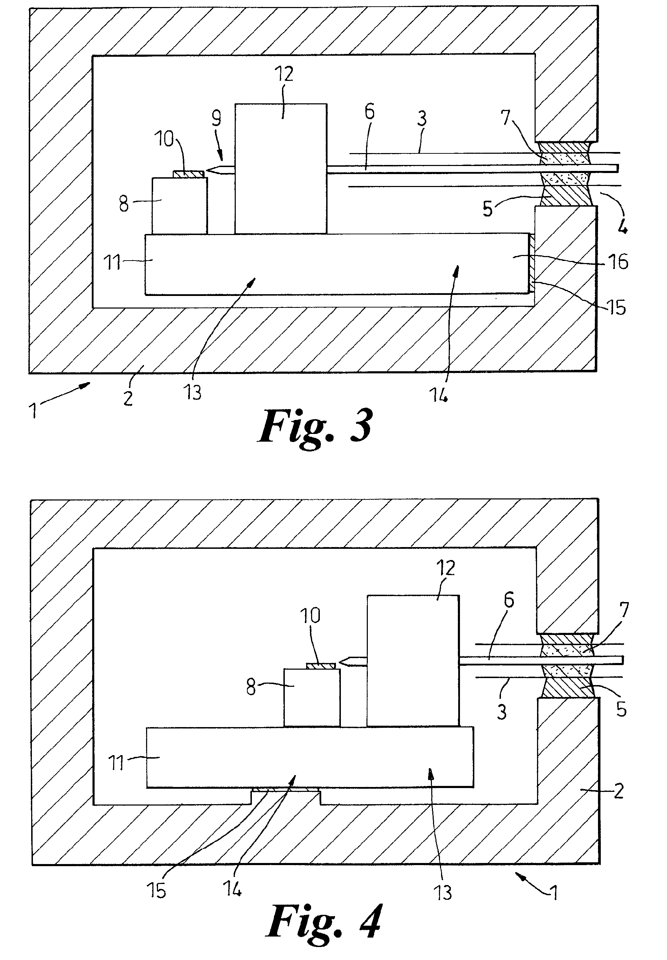

A third embodiment of the invention is shown in FIG. 3, where the submount 11 is mounted by an end face 16 to an inner side face of the housing 2, rather than by a lower side to the bottom of the housing 2. It will, of course, be appreciated, that it the submount could be so fixed to the housing by either end, but not by both ends. Although not shown, it will also be appreciated that, instead of being fixed to the housing at an end thereof, whether by an end face or a lower surface, the submount could be fixed to the housing along a side of the submount parallel to the alignment axis of the two optical components. Such a configuration would still substantially preclude stresses from the housing from causing misalignment of the components.

A further embodiment of the invention is shown in FIG. 4. In this embodiment, the submount 11 is contemplated as being circular rather than elongated, and being fixed to the housing 2 at a point substantially central to the submount 11, in a "mushroom" style arrangement. In this case, the optical components 6, 10 are arranged radially outwardly from the center of the submount 11 and this arrangement may be more suitable if there are a number of fibres to be optically coupled to one or more components fixed near the center of the submount 11 (although only one is illustrated here). Nevertheless, by having the periphery of the submount 11 suspended free from the housing 2, any stresses transmitted to the submount 11 are much less likely to affect the alignment of the optical components 6, 10 than hitherto.

It will be appreciated that although only four particular embodiments of the invention have been described in detail, various modifications and improvements can be made by a person skilled in the art without departing from the scope of the present invention. For example, even in the embodiments of FIGs 1 to 3, the submount 11 need not be elongated, but can be circular. In such a case, the component portion could still be at one periphery of the submount, with the fixing portion being circumferentially separated therefrom.
In this case, the requirement that the fixing portion be at an "end" of the submount 11 would mean that the fixing portion would be at a position diametrically opposite from the component portion and would extend no more than about 90° around the component portion. Other configurations are also possible, of course, where some fixing of the submount takes place at two or more positions. However, in such a case, the combined fixing portion still must not be allowed to extend both across the alignment axis and parallel to the alignment axis. For example, although it may be possible for the fixing portion to extend across an end of the submount remote from the component portion in a "T" arrangement, with the fixing portion being affixed to the housing at either end of the T-bar, such that the alignment axis extends between the points at which the T-bar is affixed to the housing, the fixing portion should not then also extend along the side of the component portion.

It should thus be clear to a person skilled in the art that any configuration that causes the component portion of the submount to be stressed in such a way that the optical components are moved out of alignment is not contemplated by this invention.

It should also be clear to a person skilled in the art, that the invention is not limited to the simple coupling of a laser diode to an optical fibre, but also applies to couplings of optical modulators and semiconductor amplifiers. Furthermore, an optical component may not have a single coupling, but could require an alignment at either end, for example, as in an optical modulator or semiconductor amplifier. Additionally, it will be apparent that the substrate can have more than two optical components mounted thereon. For example, there could be a laser coupled via a lens to a modulator coupled via a lens to an isolator coupled via a lens to the fibre.

## Claims

1. An apparatus for optically coupling first (10) and second (6) optical elements in an optical module (1), the apparatus comprising:
a first optical component (10);
a second optical component (6);
a substrate (11) comprising a component portion (13) and a fixing portion (14), the first and second optical components being mounted, directly or indirectly, on the component portion (13) such that they are optically aligned and optically coupled together; and
a housing (2) of the module (1) to which the fixing portion (14) of the substrate (11) is attached,
wherein the component portion (13) of the substrate (11) is substantially free of the housing (2), such that mechanical stresses in the housing (2) are substantially not transmitted to the component portion (13) of the substrate (11).

2. An apparatus for optically coupling first (10) and second (6) optical elements in an optical module (1), the apparatus comprising:
a first optical component (10);
a second optical component (6);
a substrate (11) comprising a component portion (13) and a fixing portion (14), the first and second optical components being mounted, directly or indirectly, on the component portion (13) such that they are optically aligned and optically coupled together; and
a housing (2) of the module (1) to which the fixing portion (14) of the substrate (11) is attached,
wherein the component portion (13) of the substrate (11) is suspended from the fixing portion (14) and left free of the housing (2) in a cantilever type arrangement.

3. An apparatus for optically coupling first (10) and second (6) optical elements in an optical module (1), the apparatus comprising:
a first optical component (10);
a second optical component (6);
a substrate (11) comprising a component portion (13) and a fixing portion (14), the first and second optical components being mounted, directly or indirectly, on the component portion (13) such that they are optically aligned and optically coupled together; and
a housing (2) of the module (1) to which the fixing portion (14) of the substrate (11) is attached,
wherein the component portion (13) of the substrate (11) is substantially free of the housing (2) and the fixing portion (14) of the substrate (11) does not extend around the component portion (13) for more than about 90°.

4. An apparatus for optically coupling first (10) and second (6) optical elements in an optical module (1), the apparatus comprising:
a first optical component (10);
a second optical component (6);
a substrate (11) comprising a component portion (13) and a fixing portion (14), the first and second optical components being mounted, directly or indirectly, on the component portion (13) such that they are optically aligned and optically coupled together along a coupling axis; and
a housing (2) of the module (1) to which the fixing portion (13) of the substrate (11) is attached,
wherein the component portion (13) of the substrate (1) is substantially free of the housing (2) and the fixing portion (14) of the substrate (1) does not extend both across the alignment axis and parallel to the alignment axis.

5. An apparatus for optically coupling first (10) and second (6) optical elements in an optical module (1), the apparatus comprising:
a first optical component (10);
a second optical component (6);
a substrate (11) to which the first and second optical components are mounted, directly or indirectly, such that they are optically aligned and optically coupled together; and
a housing (2) of the module (1);
the substrate (11) being attached to the housing (2) at a fixing portion (14) such that a component portion (13) of the substrate (11) on which the first and second optical components are mounted is substantially free of the housing (2) whereby mechanical stresses in the housing (2) are substantially not transmitted to the component portion (13) of the substrate (11).

6. An apparatus for optically coupling first and second optical elements in an optical module according to any preceding claim, wherein the first optical component is a laser diode.

7. An apparatus for optically coupling first and second optical elements in an optical module according to claim 6, wherein the laser diode is mounted on a heatsink, which is mounted on the substrate.

8. An apparatus for optically coupling first and second optical elements in an optical module according to any preceding claim, wherein the second optical component is an optical fibre.

9. An apparatus for optically coupling first and second optical elements in an optical module according to claim 8, wherein the optical fibre is mounted to a fibre attachment element which is mounted on the substrate.

10. An apparatus for optically coupling first and second optical elements in an optical module according to any preceding claim, wherein the substrate is substantially quadrilateral.

11. An apparatus for optically coupling first and second optical elements in an optical module according to claim 10, wherein the substrate is substantially rectangular.

12. An apparatus for optically coupling first and second optical elements in an optical module according to claim 11, wherein the fixing portion of the substrate is at a first end of the substrate and the rest of the substrate is free of the housing.

13. An apparatus for optically coupling first and second optical elements in an optical module according to claim 11, wherein the fixing portion of the substrate is at a first side of the substrate and the rest of the substrate is free of the housing.

14. An apparatus for optically coupling first and second optical elements in an optical module according to any one of claims 1 to 9, wherein the substrate is substantially circular.
